# EUROPEAN PATENT SPECIFICATION

(11) **EP 4 633 115 B1**
(45) Date of publication and mention of the grant of the patent: **25.11.2026**
(21) Application number: 24800750.2
(22) Date of filing: 16.10.2024
(51) Int. Cl.: H04L 67/52, B61L 3/12, B61L 15/00, B61L 27/20, B61L 27/70, B61L 25/02

(54) **ETCS-BASED TRAIN-TO-GROUND COMMUNICATION METHOD, TRAIN-MOUNTED DEVICE, GROUND DEVICE, AND STORAGE MEDIUM**
ETCS-BASIERTES ZUG-ZU-BODEN-KOMMUNIKATIONSVERFAHREN, ZUGMONTIERTE VORRICHTUNG, BODENVORRICHTUNG UND SPEICHERMEDIUM
PROCÉDÉ DE COMMUNICATION TRAIN-SOL BASÉ SUR L'ETCS, DISPOSITIF MONTÉ SUR TRAIN, DISPOSITIF AU SOL ET SUPPORT DE STOCKAGE

(30) Priority: 27.02.2024 CN 202410216091
(43) Date of publication of application: 15.10.2025
(73) Proprietor: CRSC RESEARCH & DESIGN INSTITUTE GROUP CO., LTD., Fengtai District Beijing 100070 (CN)
(72) Inventor: YAN, Kongxuan, Beijing 100070 (CN); CHEN, Zhiqiang, Beijing 100070 (CN); WANG, Jianmin, Beijing 100070 (CN); MENG, Fanyong, Beijing 100070 (CN); YU, Xiaona, Beijing 100070 (CN); TAN, Yuru, Beijing 100070 (CN)
(74) Representative: Haseltine Lake Kempner LLP
(86) International application number: PCT/CN2024/125215
(87) International publication number: WO 2025/179903

(56) References cited:
- EP-A1- 2 230 148
- EP-A1- 4 079 594
- WO-A1-2023/109499
- CN-A- 113 276 912
- CN-A- 115 848 460
- CN-A- 117 978 857
- DE-A1- 102013 226 728
- US-A1- 2015 142 225

## Description

The present application claims priority to China Patent Application No. 2024102160916 filed on Feb. 27, 2024.

### TECHNICAL FIELD

The present invention relates to the technical field of rail transit, in particular to an ETCS (European Train Control System)-based train-ground communication method, on-board device, ground device and storage medium.

### BACKGROUND

At present, the mainstream ETCS on-board system at level E1 only supports the signaling information transmitted by balise, and the ground information is often used by the ETCS on-board system in an intermittent approach. This information transmission mode cannot guarantee the real-time reception of the ground information, affecting the operational efficiency at level E1.
1. The instantaneity cannot be achieved. There is a certain distance between two adjacent balise groups in a section. After passing by the first groups of balises and before passing by the second groups of balises, there is a section of vacuum zone where the train cannot receive trackside messages in real time.
2. The operational efficiency of the train at level E1 is affected. Before crossing the signaling machine, the train cannot gain the real-time change of the signaling machine, so speed restriction, on sight mode and other ways are employed to guarantee safety. However, the train's operational efficiency is lowered.

Document DE 10 2013 226 728 A1 describes a method for controlling a railway vehicle, wherein information is provided to the rail vehicle when it passes over a balise, and wherein a condition is checked by the rail vehicle based on the information.

### SUMMARY

In order to solve the above problems, the inventors have made the present invention and provided an ETCS-based train-ground communication method, on-board device, ground device and storage medium through the detailed description.

The present invention provides an ETCS-based train-ground communication method, which includes:
receiving, by an on-board device of a train, prenotice information for front loop zone sent by a ground balise, in which the prenotice information includes a loop identification number, a spreading code corresponding to a loop message for front loop zone, positioning information for front loop zone and decoding information for loop message;
determining the time when the train enters the loop zone according to the positioning information for front loop zone;
selecting and receiving, by the on-board device when the train enters the loop zone, a corresponding loop message according to the spreading code, and using, if the loop identification number in the prenotice information is consistent with that in the loop message, the decoding information for loop message to decode the loop message corresponding to the loop zone for real-time front balise status and section information, or rejecting the loop message if not so; and
stopping receiving loop messages when the train exits the loop zone.

Specifically, the location information for front loop zone includes a distance of the route from the train's current position to the entering end for the loop zone, a length of the loop zone and a direction identification of the loop zone.

Specifically, the determining the time when the train enters the loop zone according to the positioning information for front loop zone, includes:
determining, according to a distance of the route from the train's current position to the entering end for the front loop zone, a length of the loop zone, a direction identification of the loop zone and the train's speed, the time when the train enters the loop zone and the time when the train exits the loop zone, respectively; and
determining, according to the time when the train enters the loop zone and the time when the train exits the loop zone, whether the train enters the loop zone or not.

Specifically, the selecting and receiving, by the on-board device, a corresponding loop message according to the spreading code, includes:
sending, by an antenna unit of the on-board device, an activation signal to a loop modem unit of a ground device; sending, by the loop modem unit after the loop modem unit is activated, a loop message to the antenna unit through a loop leaky cable; identifying, by the on-board device, the loop message for front loop zone according to the spreading code corresponding to the loop message for front loop zone; receiving, by the antenna unit of the on-board device, the identified loop message; receiving, by a loop transmission module of the on-board device, the loop message from the antenna unit; and decoding, by the loop transmission module, the loop message according to the decoding information for loop message, and sending the decoded loop message to an ETCS kernel computing unit.

Specifically, the selecting and receiving, by the on-board device, a corresponding loop message according to the spreading code, further includes:
sending, by a ground interlocking device, the loop message to a trackside electronic unit of the ground device; and sending, by the trackside electronic unit, the loop message to a loop modem unit, in which when the loop modem unit receives an external activation signal and an external power signal, the loop modem unit is activated.

Specifically, the ETCS-based train-ground communication method further includes:
in which the prenotice information includes a loop identification number, a spreading code corresponding to a loop message for front loop zone, positioning information for front loop zone and decoding information for loop message;
starting a loop message monitoring timer when the train's current position exceeds or is equal to the position of the entering end for the front loop zone determined according to the positioning information for front loop zone, and performing, by the on-board device, train safety protection by applying braking if no loop message with a loop identification number consistent with that in the prenotice information is monitored for a preset monitoring time.

Specifically, the ETCS-based train-ground communication method further includes:
comparing, by the on-board device, the version number of the current message recorded in the loop message with the maximum message version number supported by the on-board device; and ignoring, by the on-board device if the version number of the current message recorded in the loop message exceeds the maximum message version number supported by the on-board device, the loop message corresponding to the version number of the current message.

The present invention further provides an ETCS-based on-board device, which includes an antenna unit, a loop transmission module and an ETCS kernel computing unit, in which
the on-board device is configured to receive prenotice information for front loop zone sent by a ground balise, in which the prenotice information includes a loop identification number, a spreading code corresponding to a loop message for front loop zone, positioning information for front loop zone and decoding information for loop message; determine the time when a train enters the loop zone according to the positioning information for front loop zone; select and receive a corresponding loop message according to the spreading code when the train enters the loop zone, and use, if the loop identification number in the prenotice information is consistent with that in the loop message, the decoding information for loop message through the loop transmission module to decode the loop message corresponding to the loop zone, and send the decoded loop message to an ETCS kernel computing unit to gain real-time front balise status and section information, or reject the loop message if not so; and stop receiving loop messages when the train exits the loop zone.

The present invention further provides an ETCS-based ground device, which includes a balise group, a loop leaky cable and a loop modem unit, in which
the balise group is configured to send prenotice information for front loop zone of a train to an on-board device of the train, in which the prenotice information includes a loop identification number, a spreading code corresponding to a loop message for front loop zone, positioning information for front loop zone and decoding information for loop message;
the said loop identification number is used to be compared with the loop identification number in the loop message, and if consistent, the on-board device decodes the loop message corresponding to the loop zone according to the decoding information for loop message to gain real-time front balise status and section information, or if no so, the on-board device rejects the loop message;
the said spreading code is used for the on-board device to identify the loop message for front loop zone;
the said positioning information is used for determining the time when the train enters the loop zone; and
the loop modem unit is configured to receive a loop message sent by a trackside electronic unit, in which when the loop modem unit receives an external activation signal and an external power signal, the loop modem unit is activated, and after the loop modem unit is activated, the loop modem unit sends the loop message to an antenna unit of the on-board device of the train through the loop leaky cable.

The present invention further provides a computer storage medium, in which the computer storage medium has stored therein computer executable instructions which, when executed, implement the ETCS-based train-ground communication method as defined by claims 1 - 7.

The beneficial effects of the above technical solutions provided by the embodiments of the present invention at least include:
In accordance with the present invention, with the inheriting of the existing balise message processing module, and based on prenotice information for loop zone sent by a balise message, a train-ground real-time communication can be achieved at a lower cost, and the existing ETCS system can be compatible with; and in addition, after the train passes by the balise sending the prenotice information and enters a loop zone, a loop message corresponding to the loop zone can be decoded according to decoding information for loop message, so as to gain new ground information in the front in real time through the loop message, without waiting for the train to slowly pass the front ground signaling machine. Therefore, a train supporting the use of loop message can reduce the driver's dependence on ground signaling machine, reduce the use of ground signaling machine in loop zone, and improve the train's operational efficiency since the train is allowed to operate without release speed.

Other features and advantages of the present invention will be set forth in the specification which follows.

The objective and other advantages of the present invention can be realized and achieved by means of the structure particularly indicated in the written specification and claims, as well as the drawings.

The technical solutions of the present invention will be further described in detail through the drawings and examples.

### BRIEF DESCRIPTION OF DRAWINGS

The drawings are used to provide a further understanding of the present invention, constitute a part of the specification, and together with the embodiments of the present invention, serve to explain the present invention, but do not constitute a limitation of the present invention. In the drawings:
Fig. 1 is a flowchart of an ETCS-based train-ground communication method in an embodiment of the present invention;
Fig. 2 is a schematic diagram of a train-ground communication in an embodiment of the present invention;
Fig. 3 is a schematic diagram of an ETCS-1 operation mode injected by EuroLoop in an embodiment of the present invention.

### DETAILED DESCRIPTION

The exemplary embodiments of the present disclosure will be described in more detail below with reference to the drawings. Although the exemplary embodiments of the present disclosure are shown in the drawings, it should be understood that the present disclosure can be implemented in various forms and should not be limited by the embodiments set forth herein. Rather, such embodiments are provided to enable a more thorough understanding of the present disclosure, and a complete conveyance of the scope of the present disclosure to those skilled in the art.

In order to solve the problems present in the prior art, the present invention provides an ETCS (European Train Control System)-based train-ground communication method, on-board device, ground device and storage according to the independent claims.

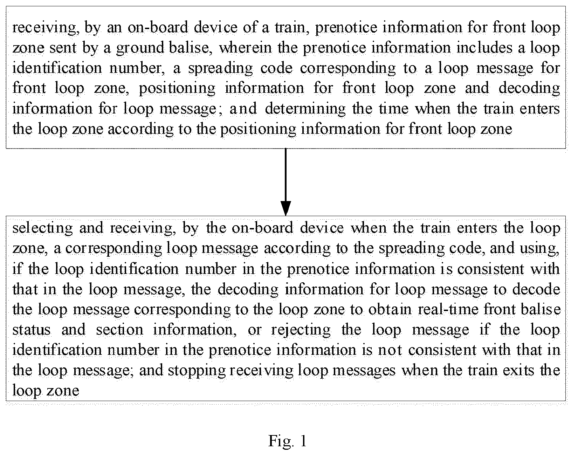

An embodiment of the present invention provides an ETCS-based train-ground communication method, the flow process of which is shown as in Fig. 1, and includes:
S1: receiving, by an on-board device of a train, prenotice information for front loop zone sent by a ground balise, in which the prenotice information includes a loop identification number, a spreading code corresponding to a loop message for front loop zone, positioning information for front loop zone and decoding information for loop message; and determining the time when the train enters the loop zone according to the positioning information for front loop zone.

The location information for front loop zone includes a distance of the route from the train's current position to the entering end for the loop zone, a length of the loop zone and a direction identification of the loop zone.

Also, the ETCS-based train-ground communication provided by the present invention can discover in time the failure of loop message reception due to the abnormality in ground loop device, and can enable the driver to receive a corresponding prompt through a man-machine display interface, so it is necessary to accurately determine when the train enters the loop zone by using the prenotice information for loop zone in the message packet. Specifically, the determining the time when the train enters the loop zone according to the positioning information for front loop zone includes: determining, according to a distance of the route from the train's current position to the entering end for the front loop zone, a length of the loop zone, a direction identification of the loop zone and the train's speed, the time when the train enters the loop zone and the time when the train exits the loop zone, respectively; and determining, according to the time when the train enters the loop zone and the time when the train exits the loop zone, whether the train enters the loop zone or not.

S2: selecting and receiving, by the on-board device when the train enters the loop zone, a corresponding loop message according to the spreading code, and using, if the loop identification number in the prenotice information is consistent with that in the loop message, the decoding information for loop message to decode the loop message corresponding to the loop zone for real-time front balise status and section information, or rejecting the loop message if not so; and stopping receiving loop messages when the train exits the loop zone.

The selecting and receiving, by the on-board device, a corresponding loop message according to the spreading code, includes: sending, by an antenna unit of the on-board device, an activation signal to a loop modem unit of a ground device; sending, by the loop modem unit after the loop modem unit is activated, a loop message to the antenna unit through a loop leaky cable; identifying, by the on-board device, the loop message for front loop zone according to the spreading code corresponding to the loop message for front loop zone; receiving, by the antenna unit of the on-board device, the identified loop message; receiving, by a loop transmission module of the on-board device, the loop message from the antenna unit; and decoding, by the loop transmission module, the loop message according to the decoding information for loop message, and sending the decoded loop message to an ETCS kernel computing unit.

The selecting and receiving, by the on-board device, a corresponding loop message according to the spreading code, further includes: sending, by a ground interlocking device, the loop message to a trackside electronic unit of the ground device; and sending, by the trackside electronic unit, the loop message to a loop modem unit, in which when the loop modem unit receives an external activation signal and an external power signal, the loop modem unit is activated.

The ETCS-based train-ground communication method further includes: in which the prenotice information includes a loop identification number, a spreading code corresponding to a loop message for front loop zone, positioning information for front loop zone and decoding information for loop message; starting a loop message monitoring timer when the train's current position exceeds or is equal to the position of the entering end for the front loop zone determined according to the positioning information for front loop zone, and performing, by the on-board device, train safety protection by applying braking if no loop message with a loop identification number consistent with that in the prenotice information is monitored for a preset monitoring time.

The ETCS-based train-ground communication method further includes: comparing, by the on-board device, the version number of the current message recorded in the loop message with the maximum message version number supported by the on-board device; and ignoring, by the on-board device if the version number of the current message recorded in the loop message exceeds the maximum message version number supported by the on-board device, the loop message corresponding to the version number of the current message.

The LOOP as described previously is a signal transmission system. In some specific embodiments, taking EuroLoop (European Loop) as an example, the Euroloop, which is a semi-continuous and intermittent transmission system, provides signal filling information in advance once the next main signaling machine in the train's travelling direction becomes available. The EuroLoop consists of an on-board functional unit and one or more trackside units. With the loop installed trackside and the induction antenna installed on train as the information transmission medium, the EuroLoop system utilizes the electromagnetic induction principle to realize a data interacting function by modulating and demodulating the digital information. It can send the injected information from the leaky cable to the train when the train stops stably or travels along the sectional direction. As such, the signaling information of the next mainbody signal in the front along the traveling direction is provided for the train in advance.

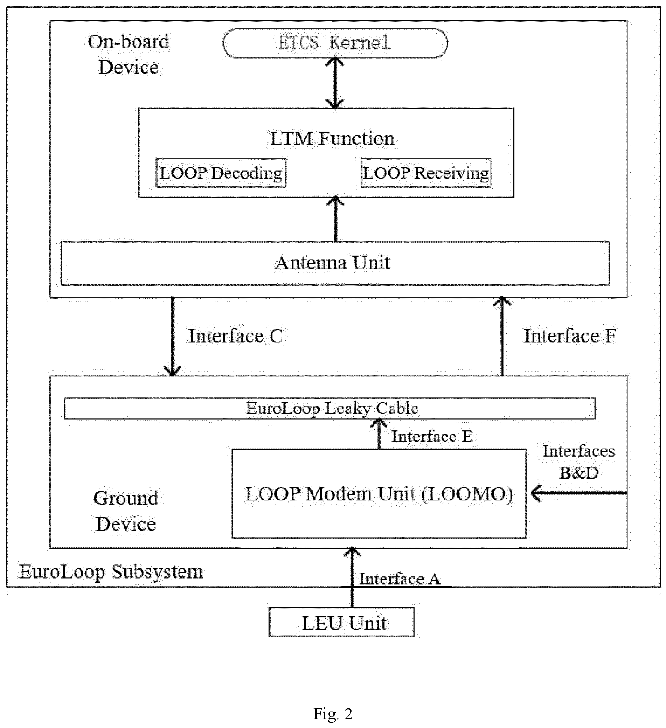

Based on the solutions of the present invention, the ETCS train control system of the EuroLoop trackside device is extended to form an ETCS train control system that is compatible with the EuroLoop subsystem, after an addition of EuroLoop message receiving function while maintaining balise message receiving function. The overall structure of the EuroLoop subsystem as set according to the technical solutions of the present invention is as shown in Fig. 2. The EuroLoop subsystem includes two primary parts: an on-board device unit (an LTM function and an antenna unit receiving function) and a ground device unit (an EuroLoop leaky cable and a loop message modem unit (LOOMO)). The internal interfaces of the system, in sequence from the ground to the on-board device, include: an interface A, which sends an EuroLoop message originating from the ground interlocking device from the LEU unit to the loop message modem unit LOOMO for message modulation and demodulation; an interface B, which is an interface for external activation signal; an interface C which activates the LOOMO by receiving an activation signal sent by the antenna unit; an interface D, which is an interface for external power signal of the LOOMO; an interface E, through which a loop message may be communicated via the LOOMO to the loop leaky cable for waiting to be sent, after the LOOMO is powered on and activated; and an interface F, which then sends from the leaky cable to the on-board antenna unit the uplink loop message, which is sent to the ETCS kernel computing unit (ETCS Kernel) after being received and decoded by the LTM of the on-board device; in which LEU (Lineside Electronic Unit) refers to the trackside electronic unit, and LTM (Loop Transmission Module) refers to the loop transmission module of the on-board device as described previously.

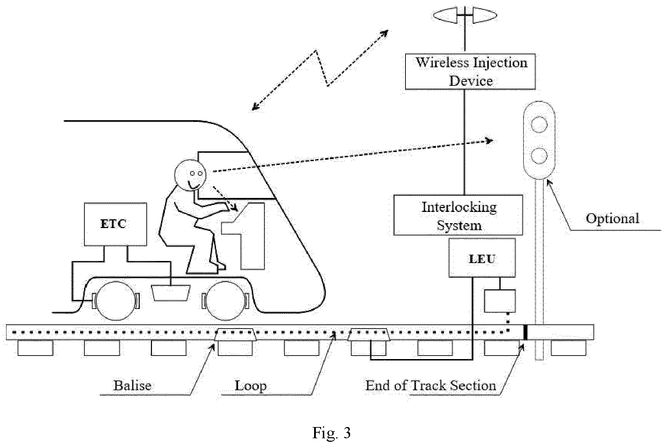

Level ETCS-1, simply referred to as E1, employs an approach with fixed tracking interval, in which the driver drives the train depending on a ground signaling machine, which performs speed monitoring; checks the train's occupancy and integrity depending on an on-track circuit or an axle counting device; covers the existing signaling systems in various countries by utilizing query balises, for train positioning and control command transmission. A level ETCS-1 system is a typical intermittent ATP (Automatic Train Protection) system. At level E1, if the display of the ground signaling machine is turned on, the train will not receive the information before passing by the balise group arranged at the signaling machine. Therefore, it is necessary for the driver to observe the ground signaling machines to learn when it is possible to move forward, and then allow the train to approach the parking point at a speed lower than the maximum permitted release speed. As such, the safety and efficiency of the train which is operating at level E1 is reduced. The ETCS-1 operation mode injected by EuroLoop according to the proposed solutions of the present invention is as shown in Fig. 3. Through the information injection by the EuroLoop, the driver can immediately learn the new information in the front through the loop message after the train passes by the prenotice balise, without waiting for the train to slowly pass the front ground signaling machine, that is, the signaling machine is optional. It can be seen that, with the application of the present invention, the installation of ground signaling machines can be reduced, and the cost of route construction and maintenance can be lowered. A route equipped with loop can reduce the use of ground signaling machines, and since it allows the train to operate without release speed, the operating efficiency of the level E1 system can be improved.

It is realized by the present invention that a train, which is travelling on a level E1 route equipped with EuroLoop device: gains a prenotice message for front loop zone, a decoding key for loop message, a length of loop zone and other information; receives the loop message after entering the loop zone to update front main balise status, section information and other information in real time; restores the balise message receiving function after exiting the loop zone; and turns off the loop message demodulation and other functions through the on-board device; in which based on the existing balise message reading function, the present invention constructs a function for the EuroLoop subsystem to realize reading and using of EuroLoop message by balise, the implementation of which includes:
1. preserving the function of receiving and processing message by balise unchanged;
2. adding the identification number prenoticing various front EuroLoop zones to the ground balise message;
3. adding the positioning information for determining position of front EuroLoop zone to the ground balise message;
4. adding the decoding information for modulating and demodulating ground loop message; and
5. using the decoding information in the prenotice information to parse the loop message sent from the ground, after the train receives the prenotice information for front loop zone through the balise and after the train enters the loop zone.

The above-mentioned information for prenoticing front loop zone is stored in the balise group in the form of message packets. The prenotice message packet includes as follows: a loop identification number, a spreading code, a distance from the current position to the beginning of loop zone, a length of loop zone and a direction identification of loop zone. After the train enters the loop zone, it firstly compares the loop identification number in the prenotice information with the loop identification number stored in the received loop message (LOOP). If the result of the comparison is "being inconsistent", the on-board system will reject the corresponding loop message. According to different ground loop device LOOMOs, a spreading code will be sent, with different values assigned, to the on-board system. The decoding information in the prenotice information is sent by the on-board system to the loop transmission module (LTM in Fig. 2). Then the loop message receiving unit (LOOP Receiving) in the LTM will receive the loop message that matches the spreading code. The information for prenoticing the length and the distance for loop zone in the message packet will be used as auxiliary information for monitoring the loop message receiving function after the train enters the loop zone. As such, a function for supporting the parsing, receiving and using of message by a ground EuroLoop device is realized.

Specifically, the implementation of monitoring abnormal message in a loop zone includes: receiving and recording information for prenoticing the loop's position in the balise group; receiving and recording an identification number for prenoticing the loop zone in the balise group; starting the loop message monitoring timer when the train's current position exceeds or is equal to the recorded starting position of the loop zone; and performing, by the on-board system safety protection by applying commonly-used braking if no loop message with a corresponding identification number is detected within 3 seconds.

In order to discover in time the failure of loop message reception due to the abnormality in ground loop device, it is necessary to manage the version of loop message. The loop message includes the version number of the current message. The on-board system will receive and record this information and compare it with the maximum message version number supported by the on-board system. If the version number of the current loop message is within the range of message version numbers supported by the on-board system, the on-board device will support the parsing and using of the loop message. If the version number of the current LOOP message is greater than the maximum message version number supported by the on-board system, the on-board device will ignore the LOOP message under this version.

In the above method of this embodiment, in accordance with the present invention, with the inheriting of the existing balise message processing module, and based on prenotice information for loop zone sent by a balise message, a train-ground real-time communication can be achieved at a lower cost, and the existing ETCS system can be compatible with; and in addition, after the train passes by the balise sending the prenotice information and enters a loop zone, a loop message corresponding to the loop zone can be decoded according to decoding information for loop message, so as to gain new ground information in the front in real time through the loop message, without waiting for the train to slowly pass the front ground signaling machine. Therefore, a train supporting the use of loop message can reduce the driver's dependence on ground signaling machine, reduce the use of ground signaling machine in loop zone, and improve the train's operational efficiency since the train is allowed to operate without release speed.

An alteration can be made by those skilled in the art to the above sequence without departing from the protection scope of the appended claims.

The present invention further provides an ETCS-based on-board device according to claim 8, which includes an antenna unit, a loop transmission module and an ETCS kernel computing unit, in which
the on-board device is configured to receive prenotice information for front loop zone sent by a ground balise, in which the prenotice information includes a loop identification number, a spreading code corresponding to a loop message for front loop zone, positioning information for front loop zone and decoding information for loop message; determine the time when a train enters the loop zone according to the positioning information for front loop zone; select and receive a corresponding loop message according to the spreading code when the train enters the loop zone, and use, if the loop identification number in the prenotice information is consistent with that in the loop message, the decoding information for loop message through the loop transmission module to decode the loop message corresponding to the loop zone, and send the decoded loop message to an ETCS kernel computing unit to gain real-time front balise status and section information, or reject the loop message if not so; and stop receiving loop messages when the train exits the loop zone.

In this embodiment, in accordance with the present invention, with the inheriting of the existing balise message processing module, and based on prenotice information for loop zone sent by a balise message, a train-ground real-time communication can be achieved at a lower cost, and the existing ETCS system can be compatible with; and in addition, after the train passes by the balise sending the prenotice information and enters a loop zone, a loop message corresponding to the loop zone can be decoded according to decoding information for loop message, so as to gain new ground information in the front in real time through the loop message, without waiting for the train to slowly pass the front ground signaling machine. Therefore, a train supporting the use of loop message can reduce the driver's dependence on ground signaling machine, reduce the use of ground signaling machine in loop zone, and improve the train's operational efficiency since the train is allowed to operate without release speed.

The present invention further provides an ETCS-based ground device according to claim 9, which includes a balise group, a loop leaky cable and a loop modem unit, in which
the balise group is configured to send prenotice information for front loop zone of a train to an on-board device of the train, in which the prenotice information includes a loop identification number, a spreading code corresponding to a loop message for front loop zone, positioning information for front loop zone and decoding information for loop message;
the said loop identification number is used to be compared with the loop identification number in the loop message, and if consistent, the on-board device decodes the loop message corresponding to the loop zone according to the decoding information for loop message to gain real-time front balise status and section information, or if no so, the on-board device rejects the loop message;
the said spreading code is used for the on-board device to identify the loop message for front loop zone;
the said positioning information is used for determining the time when the train enters the loop zone; and
the loop modem unit is configured to receive a loop message sent by a trackside electronic unit, in which when the loop modem unit receives an external activation signal and an external power signal, the loop modem unit is activated, and after the loop modem unit is activated, the loop modem unit sends the loop message to an antenna unit of the on-board device of the train through the loop leaky cable.

In this embodiment, in accordance with the present invention, with the inheriting of the existing balise message processing module, and based on prenotice information for loop zone sent by a balise message, a train-ground real-time communication can be achieved at a lower cost, and the existing ETCS system can be compatible with; and in addition, after the train passes by the balise sending the prenotice information and enters a loop zone, a loop message corresponding to the loop zone can be decoded according to decoding information for loop message, so as to gain new ground information in the front in real time through the loop message, without waiting for the train to slowly pass the front ground signaling machine. Therefore, a train supporting the use of loop message can reduce the driver's dependence on ground signaling machine, reduce the use of ground signaling machine in loop zone, and improve the train's operational efficiency since the train is allowed to operate without release speed.

The present invention further provides a computer storage medium, in which the computer storage medium has stored therein computer executable instructions which, when executed, implement the ETCS-based train-ground communication method as as defined by claims 1 - 7.

## Claims

1. An ETCS-based train-ground communication method, comprising:
receiving, by an on-board device of a train, prenotice information for front loop zone sent by a ground balise, wherein the prenotice information includes a loop identification number, a spreading code corresponding to a loop message for front loop zone, positioning information for front loop zone and decoding information for loop message; determining the time when the train enters the loop zone according to the positioning information for front loop zone;
selecting and receiving, by the on-board device when the train enters the loop zone, a corresponding loop message according to the spreading code, and using, if the loop identification number in the prenotice information is consistent with that in the loop message, the decoding information for loop message to decode the loop message corresponding to the loop zone to obtain real-time front balise status and section information, or rejecting the loop message if the loop identification number in the prenotice information is not consistent with that in the loop message; and
stopping receiving loop messages when the train exits the loop zone.

2. The method according to claim 1, wherein the location information for front loop zone includes a distance of the route from the train's current position to the entering end for the loop zone, a length of the loop zone and a direction identification of the loop zone.

3. The method according to claim 1, wherein the determining the time when the train enters the loop zone according to the positioning information for front loop zone, comprises:
determining, according to a distance of the route from the train's current position to the entering end for the loop zone, a length of the loop zone, a direction identification of the loop zone and the train's speed, the time when the train enters the loop zone and the time when the train exits the loop zone, respectively; and
determining, according to the time when the train enters the loop zone and the time when the train exits the loop zone, whether the train enters the loop zone or not.

4. The method according to claim 1, wherein the selecting and receiving, by the on-board device, a corresponding loop message according to the spreading code, comprises:
sending, by an antenna unit of the on-board device, an activation signal to a loop modem unit of a ground device; sending, by the loop modem unit after the loop modem unit is activated, a loop message to the antenna unit through a loop leaky cable; identifying, by the on-board device, the loop message for front loop zone according to the spreading code corresponding to the loop message for front loop zone; receiving, by the antenna unit of the on-board device, the identified loop message; receiving, by a loop transmission module of the on-board device, the loop message from the antenna unit; and decoding, by the loop transmission module, the loop message according to the decoding information for loop message, and sending the decoded loop message to an ETCS kernel computing unit.

5. The method according to claim 1, wherein the selecting and receiving, by the on-board device, a corresponding loop message according to the spreading code, further comprises:
sending, by a ground interlocking device, the loop message to a trackside electronic unit of the ground device; and sending, by the trackside electronic unit, the loop message to a loop modem unit, wherein when the loop modem unit receives an external activation signal and an external power signal, the loop modem unit is activated.

6. The method according to claim 1, further comprising:
wherein the prenotice information includes a loop identification number, a spreading code corresponding to a loop message for front loop zone, positioning information for front loop zone and decoding information for loop message;
starting a loop message monitoring timer when the train's current position exceeds or is equal to the position of the entering end for the loop zone determined according to the positioning information for front loop zone, and performing, by the on-board device, train safety protection by applying braking if no loop message with a loop identification number consistent with that in the prenotice information is monitored for a preset monitoring time.

7. The method according to claim 1, further comprising:
comparing, by the on-board device, the version number of the current message recorded in the loop message with the maximum message version number supported by the on-board device; and ignoring, by the on-board device if the version number of the current message recorded in the loop message exceeds the maximum message version number supported by the on-board device, the loop message corresponding to the version number of the current message.

8. An ETCS-based on-board device, comprising an antenna unit, a loop transmission module and an ETCS kernel computing unit, wherein
the on-board device is configured to receive prenotice information for front loop zone sent by a ground balise, wherein the prenotice information includes a loop identification number, a spreading code corresponding to a loop message for front loop zone, positioning information for front loop zone and decoding information for loop message; determine the time when a train enters the loop zone according to the positioning information for front loop zone; select and receive a corresponding loop message according to the spreading code when the train enters the loop zone, and use, if the loop identification number in the prenotice information is consistent with that in the loop message, the decoding information for loop message through the loop transmission module to decode the loop message corresponding to the loop zone, and send the decoded loop message to an ETCS kernel computing unit to obtain real-time front balise status and section information, or reject the loop message if the loop identification number in the prenotice information is not consistent with that in the loop message; and stop receiving loop messages when the train exits the loop zone.

9. An ETCS-based ground device, comprising a balise group, a loop leaky cable and a loop modem unit, wherein
the balise group is configured to send prenotice information for front loop zone of a train to an on-board device of the train, wherein the prenotice information includes a loop identification number, a spreading code corresponding to a loop message for front loop zone, positioning information for front loop zone and decoding information for loop message;
the said loop identification number is used to be compared with the loop identification number in the loop message, and if consistent, the on-board device decodes the loop message corresponding to the loop zone according to the decoding information for loop message to obtain real-time front balise status and section information, or if not consistent, the on-board device rejects the loop message;
the said spreading code is used for the on-board device to identify the loop message for front loop zone;
the said positioning information is used for determining the time when the train enters the loop zone; and
the loop modem unit is configured to receive a loop message sent by a trackside electronic unit, wherein when the loop modem unit receives an external activation signal and an external power signal, the loop modem unit is activated, and after the loop modem unit is activated, the loop modem unit sends the loop message to an antenna unit of the on-board device of the train through the loop leaky cable.

10. A computer storage medium, wherein the computer storage medium has stored therein computer executable instructions which, when executed, implement the ETCS-based train-ground communication method according to any of claims 1 to 7.

## Patentansprüche

1. ETCS-basiertes Zug-Boden-Kommunikationsverfahren, umfassend:
Empfangen von durch eine Bodenbalise gesendeten Vorankündigungsinformationen für eine vorausliegende Schleifenzone durch eine Bordvorrichtung eines Zugs, wobei die Vorankündigungsinformationen eine Schleifenidentifikationsnummer, einen einer Schleifennachricht für die vorausliegende Schleifenzone entsprechenden Spreizcode, Positionierungsinformationen für die vorausliegende Schleifenzone und Dekodierungsinformationen für die Schleifennachricht beinhalten;
Bestimmen des Zeitpunkts, zu dem der Zug in die Schleifenzone einfährt, gemäß den Positionierungsinformationen für die vorausliegende Schleifenzone;
Auswählen und Empfangen einer entsprechenden Schleifennachricht gemäß dem Spreizcode durch die Bordvorrichtung, wenn der Zug in die Schleifenzone einfährt, und, falls die Schleifenidentifikationsnummer in den Vorankündigungsinformationen mit derjenigen in der Schleifennachricht übereinstimmt, Verwenden der Dekodierungsinformationen für die Schleifennachricht, um die der Schleifenzone entsprechende Schleifennachricht zu dekodieren, um Echtzeitinformationen über den Zustand der vorausliegenden Balise und den Teilabschnitt zu erhalten, oder
Verwerfen der Schleifennachricht, falls die Schleifenidentifikationsnummer in den Vorankündigungsinformationen nicht mit derjenigen in der Schleifennachricht übereinstimmt; und
Stoppen des Empfangens von Schleifennachrichten, wenn der Zug die Schleifenzone verlässt.

2. Verfahren nach Anspruch 1, wobei die Standortinformationen für die vorausliegende Schleifenzone eine Entfernung der Strecke von der aktuellen Position des Zugs bis zum Einfahrende in die Schleifenzone, eine Länge der Schleifenzone und eine Richtungsidentifikation der Schleifenzone beinhalten.

3. Verfahren nach Anspruch 1, wobei das Bestimmen des Zeitpunkts, zu dem der Zug in die Schleifenzone einfährt, gemäß den Positionierungsinformationen für die vorausliegende Schleifenzone Folgendes umfasst:
Bestimmen einer Länge der Schleifenzone, einer Richtungsidentifikation der Schleifenzone und der Geschwindigkeit des Zugs, des Zeitpunkts, zu dem der Zug in die Schleifenzone einfährt, beziehungsweise des Zeitpunkts, zu dem der Zug die Schleifenzone verlässt, gemäß einer Entfernung der Strecke von der aktuellen Position des Zugs bis zum Einfahrende in die Schleifenzone; und
Bestimmen, ob der Zug in die Schleifenzone einfährt oder nicht, gemäß dem Zeitpunkt, zu dem der Zug in die Schleifenzone einfährt, und dem Zeitpunkt, zu dem der Zug die Schleifenzone verlässt.

4. Verfahren nach Anspruch 1, wobei das Auswählen und Empfangen einer entsprechenden Schleifennachricht gemäß dem Spreizcode durch die Bordvorrichtung Folgendes umfasst:
Senden eines Aktivierungssignals durch eine Antenneneinheit der Bordvorrichtung an eine Schleifenmodemeinheit einer Bodenvorrichtung; Senden einer Schleifennachricht über ein Schleifen-Leckwellenkabel an die Antenneneinheit durch die Schleifenmodemeinheit nach dem Aktivieren der Schleifenmodemeinheit; Identifizieren der Schleifennachricht für die vorausliegende Schleifenzone durch die Bordvorrichtung gemäß dem der Schleifennachricht für die vorausliegende Schleifenzone entsprechenden Spreizcode; Empfangen der identifizierten Schleifennachricht durch die Antenneneinheit der Bordvorrichtung; Empfangen der Schleifennachricht von der Antenneneinheit durch ein Schleifenübertragungsmodul der Bordvorrichtung;
und Dekodieren der Schleifennachricht durch das Schleifenübertragungsmodul gemäß den Dekodierungsinformationen für die Schleifennachricht und Senden der dekodierten Schleifennachricht an eine ETCS-Kernel-Recheneinheit.

5. Verfahren nach Anspruch 1, wobei das Auswählen und Empfangen einer entsprechenden Schleifennachricht gemäß dem Spreizcode durch die Bordvorrichtung ferner Folgendes umfasst: Senden der Schleifennachricht durch eine Bodenstellwerksvorrichtung an eine gleisseitige elektronische Einheit der Bodenvorrichtung; und Senden der Schleifennachricht durch die gleisseitige elektronische Einheit an eine Schleifenmodemeinheit, wobei die Schleifenmodemeinheit aktiviert wird, wenn die Schleifenmodemeinheit ein externes Aktivierungssignal und ein externes Leistungssignal empfängt.

6. Verfahren nach Anspruch 1, ferner umfassend:
wobei die Vorankündigungsinformationen eine Schleifenidentifikationsnummer, einen einer Schleifennachricht für die vorausliegende Schleifenzone entsprechenden Spreizcode, Positionierungsinformationen für die vorausliegende Schleifenzone und Dekodierungsinformationen für die Schleifennachricht beinhalten;
Starten eines Schleifennachricht-Überwachungstimers, wenn die aktuelle Position des Zugs die gemäß den Positionierungsinformationen für die vorausliegende Schleifenzone bestimmte Position des Einfahrendes in die Schleifenzone überschreitet oder dieser gleicht, und Durchführen eines Zugsicherheitsschutzes durch die Bordvorrichtung durch Anwenden von Bremsen, falls während einer voreingestellten Überwachungszeit keine Schleifennachricht mit einer Schleifenidentifikationsnummer, die mit derjenigen in den Vorankündigungsinformationen übereinstimmt, überwacht wird.

7. Verfahren nach Anspruch 1, ferner umfassend:
Vergleichen der Versionsnummer der in der Schleifennachricht aufgezeichneten aktuellen Nachricht durch die Bordvorrichtung mit der durch die Bordvorrichtung unterstützten maximalen Nachrichtenversionsnummer; und Nichtberücksichtigen der der Versionsnummer der aktuellen Nachricht entsprechenden Schleifennachricht durch die Bordvorrichtung, falls die Versionsnummer der in der Schleifennachricht aufgezeichneten aktuellen Nachricht die durch die Bordvorrichtung unterstützte maximale Nachrichtenversionsnummer überschreitet.

8. ETCS-basierte Bordvorrichtung, umfassend eine Antenneneinheit, ein Schleifenübertragungsmodul und eine ETCS-Kernel-Recheneinheit, wobei
die Bordvorrichtung ausgelegt ist, um durch eine Bodenbalise gesendete Vorankündigungsinformationen für eine vorausliegende Schleifenzone zu empfangen, wobei die Vorankündigungsinformationen eine Schleifenidentifikationsnummer, einen einer Schleifennachricht für die vorausliegende Schleifenzone entsprechenden Spreizcode, Positionierungsinformationen für die vorausliegende Schleifenzone und Dekodierungsinformationen für die Schleifennachricht beinhalten;
den Zeitpunkt, zu dem ein Zug in die Schleifenzone einfährt, gemäß den Positionierungsinformationen für die vorausliegende Schleifenzone zu bestimmen; eine entsprechende Schleifennachricht gemäß dem Spreizcode auszuwählen und zu empfangen, wenn der Zug in die Schleifenzone einfährt, und, falls die Schleifenidentifikationsnummer in den Vorankündigungsinformationen mit derjenigen in der Schleifennachricht übereinstimmt, die Dekodierungsinformationen für die Schleifennachricht über das Schleifenübertragungsmodul zu verwenden, um die der Schleifenzone entsprechende Schleifennachricht zu dekodieren, und die dekodierte Schleifennachricht an eine ETCS-Kernel-Recheneinheit zu senden, um Echtzeitinformationen über den Zustand der vorausliegenden Balise und den Teilabschnitt zu erhalten, oder die Schleifennachricht zu verwerfen, falls die Schleifenidentifikationsnummer in den Vorankündigungsinformationen nicht mit derjenigen in der Schleifennachricht übereinstimmt; und
das Empfangen von Schleifennachrichten zu stoppen, wenn der Zug die Schleifenzone verlässt.

9. ETCS-basierte Bodenvorrichtung, umfassend eine Balisengruppe, ein Schleifen-Leckwellenkabel und eine Schleifenmodemeinheit, wobei
die Balisengruppe ausgelegt ist, um Vorankündigungsinformationen für eine vorausliegende Schleifenzone eines Zugs an eine Bordvorrichtung des Zugs zu senden, wobei die Vorankündigungsinformationen eine Schleifenidentifikationsnummer, einen einer Schleifennachricht für die vorausliegende Schleifenzone entsprechenden Spreizcode, Positionierungsinformationen für die vorausliegende Schleifenzone und Dekodierungsinformationen für die Schleifennachricht beinhalten;
die Schleifenidentifikationsnummer verwendet wird, um mit der Schleifenidentifikationsnummer in der Schleifennachricht verglichen zu werden, und die Bordvorrichtung bei Übereinstimmung die der Schleifenzone entsprechende Schleifennachricht gemäß den Dekodierungsinformationen für die Schleifennachricht dekodiert, um Echtzeitinformationen über den Zustand der vorausliegenden Balise und den Teilabschnitt zu erhalten, oder die Bordvorrichtung bei Nichtübereinstimmung die Schleifennachricht verwirft;
der Spreizcode verwendet wird, damit die Bordvorrichtung die Schleifennachricht für die vorausliegende Schleifenzone identifiziert;
die Positionierungsinformationen zum Bestimmen des Zeitpunkts, zu dem der Zug in die Schleifenzone einfährt, verwendet werden; und
die Schleifenmodemeinheit ausgelegt ist, um eine durch eine gleisseitige elektronische Einheit gesendete Schleifennachricht zu empfangen, wobei die Schleifenmodemeinheit aktiviert wird, wenn die Schleifenmodemeinheit ein externes Aktivierungssignal und ein externes Leistungssignal empfängt, und die Schleifenmodemeinheit die Schleifennachricht über das Schleifen-Leckwellenkabel nach dem Aktivieren der Schleifenmodemeinheit an eine Antenneneinheit der Bordvorrichtung des Zugs sendet.

10. Computerspeichermedium, wobei das Computerspeichermedium darin gespeicherte computerausführbare Anweisungen aufweist, die bei Ausführung das ETCS-basierte Zug-Boden-Kommunikationsverfahren nach einem der Ansprüche 1 bis 7 implementieren.

## Revendications

1. Procédé de communication train-sol basé sur l'ETCS, comprenant :
la réception, par un dispositif embarqué d'un train, d'informations de pré-annonce concernant la zone de boucle avant envoyées par une balise au sol, dans lequel les informations de pré-annonce comportent un numéro d'identification de boucle, un code d'étalement correspondant à un message de boucle pour la zone de boucle avant, des informations de positionnement pour la zone de boucle avant et des informations de décodage pour le message de boucle ;
la détermination de l'heure à laquelle le train entre dans la zone de boucle en fonction des informations de positionnement de la zone de boucle avant ;
la sélection et la réception, par le dispositif embarqué lorsque le train entre dans la zone de boucle, d'un message de boucle correspondant en fonction du code d'étalement, et l'utilisation, si le numéro d'identification de boucle dans les informations de pré-annonce correspond à celui du message de boucle, des informations de décodage du message de boucle pour décoder le message de boucle correspondant à la zone de boucle afin d'obtenir l'état de balise avant en temps réel et des informations de section, ou le rejet du message de boucle si le numéro d'identification de boucle dans les informations de pré-annonce ne correspond pas à celui du message de boucle ; et
l'arrêt de la réception des messages de boucle lorsque le train quitte la zone de boucle.

2. Procédé selon la revendication 1, dans lequel les informations de localisation de la zone de boucle avant comportent une distance de l'itinéraire depuis la position actuelle du train jusqu'à l'extrémité d'entrée de la zone de boucle, une longueur de la zone de boucle et une identification de direction de la zone de boucle.

3. Procédé selon la revendication 1, dans lequel la détermination de l'heure à laquelle le train entre dans la zone de boucle en fonction des informations de positionnement de la zone de boucle avant, comprend :
la détermination, en fonction d'une distance de l'itinéraire depuis la position actuelle du train jusqu'à l'extrémité d'entrée de la zone de boucle, d'une longueur de la zone de boucle, d'une identification de direction de la zone de boucle et de la vitesse du train, de l'heure à laquelle le train entre dans la zone de boucle et de l'heure à laquelle le train quitte la zone de boucle, respectivement ; et
le fait de déterminer, en fonction de l'heure à laquelle le train entre dans la zone de boucle et de l'heure à laquelle le train quitte la zone de boucle, si le train entre ou non dans la zone de boucle.

4. Procédé selon la revendication 1, dans lequel la sélection et la réception, par le dispositif embarqué, d'un message de boucle correspondant en fonction du code d'étalement, comprennent :
l'envoi, par une unité d'antenne du dispositif embarqué, d'un signal d'activation à une unité modem de transmission en boucle d'un dispositif au sol ; l'envoi, par l'unité modem de transmission en boucle après l'activation de l'unité modem de transmission en boucle, d'un message de boucle à l'unité d'antenne via un câble rayonnant en boucle ; l'identification, par le dispositif embarqué, du message de boucle pour la zone de boucle avant en fonction du code d'étalement correspondant au message de boucle de la zone de boucle avant ; la réception, par l'unité d'antenne du dispositif embarqué, du message de boucle identifié ; la réception, par un module de transmission en boucle du dispositif embarqué, du message de boucle provenant de l'unité d'antenne ;
et le décodage, par le module de transmission en boucle, du message de boucle en fonction des informations de décodage du message de boucle, et l'envoi du message de boucle décodé à une unité de calcul du noyau ETCS.

5. Procédé selon la revendication 1, dans lequel la sélection et la réception, par le dispositif embarqué, d'un message de boucle correspondant en fonction du code d'étalement, comprend en outre :
l'envoi, par un dispositif d'enclenchement au sol, du message de boucle à une unité électronique côté voie du dispositif au sol ; et l'envoi, par l'unité électronique côté voie, du message de boucle à une unité modem de transmission en boucle, dans lequel lorsque l'unité modem de transmission en boucle reçoit un signal d'activation externe et un signal d'alimentation externe, l'unité modem de transmission en boucle est activée.

6. Procédé selon la revendication 1, comprenant en outre :
dans lequel les informations de pré-annonce comportent un numéro d'identification de boucle, un code d'étalement correspondant à un message de boucle pour la zone de boucle avant, des informations de positionnement pour la zone de boucle avant et des informations de décodage pour le message de boucle ;
le déclenchement d'un minuteur de surveillance de message de boucle lorsque la position actuelle du train dépasse ou est égale à la position de l'extrémité d'entrée de la zone de boucle déterminée en fonction des informations de positionnement de la zone de boucle avant, et la mise en œuvre, par le dispositif embarqué, d'une protection de sécurité de train par freinage si aucun message de boucle avec un numéro d'identification de boucle qui correspond à celui des informations de pré-annonce n'est détecté pendant une durée de surveillance prédéfinie.

7. Procédé selon la revendication 1, comprenant en outre :
la comparaison, par le dispositif embarqué, du numéro de version du message actuel enregistré dans le message de boucle avec le numéro de version de message maximal pris en charge par le dispositif embarqué ; et le fait d'ignorer, par le dispositif embarqué, si le numéro de version du message actuel enregistré dans le message de boucle dépasse le numéro de version de message maximal pris en charge par le dispositif embarqué, le message de boucle correspondant au numéro de version du message actuel.

8. Dispositif embarqué basé sur l'ETCS, comprenant une unité d'antenne, un module de transmission en boucle et une unité de calcul du noyau ETCS, dans lequel
le dispositif embarqué est configuré pour recevoir des informations de pré-annonce concernant la zone de boucle avant envoyées par une balise au sol, dans lequel les informations de pré-annonce comportent un numéro d'identification de boucle, un code d'étalement correspondant à un message de boucle pour la zone de boucle avant, des informations de positionnement pour la zone de boucle avant et des informations de décodage pour le message de boucle ;
déterminer l'heure à laquelle un train entre dans la zone de boucle en fonction des informations de positionnement de la zone de boucle avant ; sélectionner et recevoir un message de boucle correspondant en fonction du code d'étalement lorsque le train entre dans la zone de boucle, et utiliser, si le numéro d'identification de boucle dans les informations de pré-annonce correspond à celui contenu dans le message de boucle, les informations de décodage du message de boucle via le module de transmission en boucle pour décoder le message de boucle correspondant à la zone de boucle, et envoyer le message de boucle décodé à une unité de calcul du noyau ETCS afin d'obtenir l'état de balise avant en temps réel et les informations de section, ou rejeter le message de boucle si le numéro d'identification de boucle dans les informations de pré-annonce ne correspond pas à celui du message de boucle ; et
arrêter de recevoir des messages de boucle lorsque le train quitte la zone de boucle.

9. Dispositif au sol basé sur l'ETCS, comprenant un groupe de balises, un câble rayonnant en boucle et une unité modem de transmission en boucle, dans lequel
le groupe de balises est configuré pour envoyer des informations de pré-annonce concernant la zone de boucle avant d'un train à un dispositif embarqué du train, dans lequel les informations de pré-annonce comportent un numéro d'identification de boucle, un code d'étalement correspondant à un message de boucle pour la zone de boucle avant, des informations de positionnement pour la zone de boucle avant et des informations de décodage pour le message de boucle ;
ledit numéro d'identification de boucle est utilisé pour être comparé au numéro d'identification de boucle dans le message de boucle, et s'il correspond, le dispositif embarqué décode le message de boucle correspondant à la zone de boucle en fonction des informations de décodage du message de boucle afin d'obtenir l'état de balise avant en temps réel et les informations de section, ou s'il ne correspond pas, le dispositif embarqué rejette le message de boucle ;
ledit code d'étalement est utilisé par le dispositif embarqué pour identifier le message de boucle pour la zone de boucle avant ;
lesdites informations de positionnement sont utilisées pour déterminer l'heure à laquelle le train entre dans la zone de boucle ; et
l'unité modem de transmission en boucle est configurée pour recevoir un message de boucle envoyé par une unité électronique côté voie, dans lequel l'unité modem de transmission en boucle est activée lorsqu'elle reçoit un signal d'activation externe et un signal d'alimentation externe, et après l'activation de l'unité modem de transmission en boucle, l'unité modem de transmission en boucle envoie le message de boucle à une unité d'antenne du dispositif embarqué du train via le câble rayonnant en boucle.

10. Support de stockage informatique, dans lequel le support de stockage informatique contient des instructions exécutables par ordinateur qui, lorsqu'elles sont exécutées, mettent en œuvre le procédé de communication train-sol basé sur l'ETCS selon l'une quelconque des revendications 1 à 7.
